# FASCICULE DE BREVET EUROPEEN

(11) **EP 3 254 832 B1**
(45) Date de publication et mention de la délivrance du brevet: **24.11.2021**
(21) Numéro de dépôt: 17175310.6
(22) Date de dépôt: 09.06.2017
(51) Int. Cl.: B29C 65/36, B29C 65/66, B29C 45/14, F16L 47/02, B29K 101/12, B29K 27/06, B29K 55/02

(54) **ELÉMENT DE RACCORD, RACCORD AVEC UN TEL ÉLÉMENT ET PROCÉDÉ DE FABRICATION D'UN ÉLÉMENT DE RACCORD**
ANSCHLUSSELEMENT, ANSCHLUSS MIT EINEM SOLCHEN ELEMENT UND HERSTELLUNGSVERFAHREN EINES SOLCHEN ANSCHLUSSELEMENTS
CONNECTION ELEMENT, CONNECTION WITH SUCH AN ELEMENT AND METHOD FOR MANUFACTURING A CONNECTION ELEMENT

(30) Priorité: 10.06.2016 FR 1655379
(43) Date de publication de la demande: 13.12.2017
(73) Titulaire: GIRPI, 76700 Harfleur (FR)
(72) Inventeur: Pollet, Jean-Claude, 78740 Vaux Sur Seine (FR); Lesaint, Clément, 76600 Le Havre (FR); Gournès, Nicolas, 76110 Bréauté (FR); Comté, Dominique, 78410 Aubergenville (FR); Teixeira Pinto, José, 78540 Vernouillet (FR)
(74) Mandataire: Sonnenberg Harrison Partners

(56) Documents cités:
- EP-A1- 1 079 167
- EP-A1- 2 172 328
- DE-A1- 19 941 084
- DE-B- 1 291 109
- FR-A1- 2 748 415
- JP-A- H0 439 494
- JP-A- H06 174 170

## Description

La présente invention concerne les raccords de tubes ou tuyaux. Plus précisément, la présente invention concerne un élément de raccord, un raccord avec un tel élément de raccord et un procédé de fabrication d'un tel élément de raccord.

On connait déjà de la demande de brevet FR 2 748 415 A1 un élément de raccord conçu pour permettre l'assemblage par soudage par induction ou électro-fusion d'au moins deux pièces de matériaux thermoplastiques. L'élément de raccord comprend un bloc de matériau thermoplastique, dans lequel des organes élastiques chauffants, par exemple ressort à spirale élastique, sont noyés dans un état précontraint. Pendant l'opération de soudage, l'organe élastique chauffant fond le matériau au voisinage de l'organe, ce qui lui permet alors de se déplacer et de passer de son état précontraint à son état naturel à cheval entre les deux pièces à souder. Un autre élément de connexion est divulgué dans le document EP1079167A1.

Les systèmes d'électro-fusion connus permettent d'assembler des tubes et raccords en matériau polymères cristallins ou semi-cristallins par exemple tels des polyoléfines, par exemple polyéthylène, polypropylène ou poly-butylène, des polyamides, des fluorés, etc. Dans ces polymères cristallins, le ressort peut se déplacer facilement dans la matière lors de la fusion du matériau, grâce à sa faible viscosité à l'état fondu, pour reprendre son état non contraint, naturel qui le positionne à cheval sur l'interface des pièces à assembler. Les documents FR 2 748 415 et JP H06 174 170 divulguent tous les deux un élément de raccord selon le préambule de la revendication 1, et un procédé de raccord pour polymères cristallins, dans lequel l'organe élastique chauffant a, en position non contrainte, un diamètre extérieur supérieur ou égal au diamètre interne de l'emboiture.

Cependant, l'élément de raccord et le procédé d'électrofusion connus du document FR 2 748 415 A1 ne permettent pas d'aboutir à un raccord étanche lorsque les pièces sont en matériau de type polymères amorphes ou faiblement cristallins, tel que le PVC, PVC-C ou ABS. Les polymères amorphes ou faiblement cristallins sont dans un état caractérisé par un comportement quasi caoutchoutique, donc une viscosité très élevée, supérieure à celle des polymères cristallins, une fois chauffés au-delà de leur température de ramollissement. Il en résulte que l'organe élastique est freiné dans son déplacement par le matériau en polymère amorphe ou faiblement cristallin. De ce fait, le ressort ne peut reprendre son état naturel, tout au moins cela prendra un temps important pendant lequel le polymère amorphe ou faiblement cristallin peut se dégrader thermiquement, ce qui ne permet pas d'atteindre les performances fonctionnelles du raccordement.

De plus, l'organe élastique ne peut pas se déplacer facilement dans la matière et n'arrive pas à atteindre une position à cheval à l'interface des pièces à assembler, lorsque les pièces sont en matériau thermoplastiques de très haute viscosité et thermiquement peu stables comme par exemple le PVC, le CPVC, l'ABS.

Par ailleurs, les polymères cristallins et les polymères amorphes présentent également un comportement thermique différent. D'une part, les polymères amorphes ou faiblement cristallins ont une stabilité thermique inférieure à celle des polymères cristallins, ce qui limite la marge de manœuvre du procédé de raccordement. D'autre part, lorsque le polymère cristallin par exemple de type polyéthylène est chauffé, il passe par fusion de son état solide cristallin à un état non cristallin liquide de faible viscosité, et s'expanse fortement. Cette expansion développe ainsi une pression dans la phase liquide, et favorise ainsi un contact intime entre les matières du raccord et celle du tube, qui, en combinaison avec la faible viscosité des matières du tube et celle du raccord, facilite l'interpénétration moléculaire entre les matières et donc une bonne soudure. Ceci assure la qualité de l'assemblage, tant pour la tenue mécanique que l'étanchéité. Ce phénomène de forte expansion n'est pas présent pour les polymères amorphes ou faiblement cristallins. Sur ce fondement l'art antérieur n'a pas pris en considération les spécificités physiques liées à l'assemblage des polymères très visqueux par exemple faiblement cristallins ou amorphes tels que le PVC, le PVC-C et l'ABS. Il existait de ce fait un préjugé contre l'utilisation de l'électrofusion avec ces matériaux, sa mise en pratique afin d'obtenir des résultats satisfaisants semblait impossible, les essais résultant dans l'impossibilité d'obtenir de véritables soudures.

Un objet de l'invention est de proposer un élément de raccord et un procédé de raccord pour des polymères de type faiblement cristallin ou amorphe.

A cet effet, l'invention propose un élément de raccord comprenant une emboiture en matériau thermoplastique pour insérer un élément de tube, l'emboiture pouvant être soudée à l'élément de tube selon une surface de jonction, l'emboiture ayant un diamètre interne d'emboiture, et au moins un élément précontraint chauffant noyé dans l'emboiture, dans un premier état précontraint en expansion dans une position initiale dans laquelle le diamètre interne du au moins un élément précontraint est égal ou supérieur au diamètre interne d'emboiture et sur le pourtour de la surface de jonction, dans lequel le au moins un élément précontraint est apte à prendre un deuxième état précontraint lorsque sa température dépasse une température locale de transition d'un état solide à un état pâteux visqueux du matériau thermoplastique. Le au moins un élément précontraint, dans un état stable non contraint, a un diamètre extérieur inférieur au diamètre interne de l'emboiture.

Le matériau thermoplastique peut être un polymère amorphe ou faiblement cristallin, PVC, PVC-C ou ABS. Par faiblement cristallin, on entend normalement un pourcentage ou taux de cristallinité inférieur à 20%. Dans des modes de réalisations préférentiels l'on peut définir un pourcentage ou taux de cristallinité inférieur à 10% ou encore inférieur à 5% pour former la limite d'un matériau faiblement cristallin.

Ainsi, la présente invention propose un élément de raccord qui est apte à être utilisé pour assemblage avec un tube. Lors de l'assemblage, l'élément élastique chauffant peut prendre un deuxième état précontraint dans lequel l'élément élastique peut se trouver dans une position finale à cheval entre le tube et l'emboiture de l'élément de raccord. Lors du mouvement de rétractation de l'élément élastique, l'élément élastique peut entrainer la matière de l'élément de raccord dans la matière du tube créant ainsi des interpénétrations. Un tel élément de raccord permet un assemblage d'éléments en matériau thermoplastique polymère amorphe ou faiblement cristallin, par combinaison d'interpénétration locale de matières, assurant un rôle majoritairement d'étanchéité et par chevauchement d'élément métallique, jouant majoritairement un rôle, après l'assemblage, de résistance mécanique, entre l'élément de tube et l'emboiture. En effet, l'élément précontraint, adapté pour rester encore sous contrainte en position finale de raccord, à cheval entre l'emboiture et l'élément de tube inséré dans l'emboiture, pourra se déplacer dans le matériau thermoplastique amorphe, afin de prendre la position finale, pour l'assemblage, entre l'élément de raccord et le tube.

Le ou les éléments élastiques sont des éléments aptes à être chauffés. Le ou les éléments élastiques peuvent être conducteurs et sont destinés à être chauffés par induction.

Un ancrage mécanique et une étanchéité du raccord peuvent être obtenus par une ou plusieurs lignes de soudures locales. Les soudures sont obtenues par le mélange des matériaux, le ou les éléments élastiques précontraints malaxant localement les matières lors du passage entre le premier état précontraint et le deuxième état précontraint. Le ou les éléments précontraints, en plus de permettre le ramollissement par chauffage ainsi qu'un mouvement des matériaux assurant un bon inter-contact, assure(nt) également une stabilité mécanique du raccord après assemblage.

Selon un aspect de l'invention, le au moins un élément précontraint est un organe élastique, de préférence un ressort hélicoïdal refermé sur lui-même, dimensionné de sorte de stocker une énergie élastique permettant à l'organe élastique de se déplacer en position finale encore sous contrainte à cheval entre l'emboiture et le tube, sous les effets combinés de l'énergie élastique, de la viscosité et de la résistance à la friction du matériau thermoplastique amorphe ou faiblement cristallin, ainsi que de la puissance de chauffe transmise à chaque instant par induction à l'élément élastique ou autrement dit de la programmation de chauffe et de son interruption permettant de stopper la progression de l'élément précontraint afin qu'il s'immobilise dans sa position à cheval entre l'emboiture et le tube. En d'autres termes, le au moins un élément précontraint est destiné à être chauffé selon une programmation définie de telle sorte que l'élément élastique arrête sa progression vers son état naturel de façon à s'immobiliser à cheval entre l'emboîture et le tube.

Ces caractéristiques permettent d'obtenir un chauffage rapide par le au moins un élément précontraint pour atteindre la température de ramollissement local suffisant du matériau thermoplastique, et permettent un ramollissement local du matériau thermoplastique, tout en obtenant une force de rappel suffisante pour permettre à l'organe élastique d'atteindre une position finale de raccord tout en fournissant un malaxage et une mise en contact intime malgré la quasi absence de pression générée par l'expansion thermique des matériaux.

La présente invention propose également un raccord comprenant un tel élément de raccord et un élément de tube inséré dans l'élément de raccord, dans lequel l'élément de tube et l'élément de raccord sont assemblés par combinaison d'interpénétration locale des matières, et dans lequel le au moins un élément précontraint est à cheval entre l'emboiture et l'élément de tube, dans un état final précontraint en expansion, différent de l'état stable non contraint.

Selon un aspect, la surface de jonction entre l'élément de raccord et le tube comprend une ligne de soudures, sur le pourtour de la surface de jonction. Par cette ligne de soudure, on obtient un assemblage mécanique étanche, résistant bien à la pression et à la température, sans besoin de joint d'étanchéité additionnel.

L'élément de tube et l'élément de raccord peuvent être dans un matériau thermoplastique qui est un polymère faiblement cristallin ou amorphe, par exemple PVC, PVC-C ou ABS.

La présente invention vise aussi un procédé de fabrication d'un tel élément de raccord, comprenant les étapes suivantes: placer au moins un élément précontraint, en particulier un organe élastique chauffant, dans un premier état précontraint en expansion, ainsi qu'une entretoise sur un noyau de moule, et injecter un matériau thermoplastique afin de surmouler le au moins un élément précontraint et l'entretoise.

L'entretoise permet de maintenir la position du au moins un élément précontraint. On peut prévoir d'autres entretoises pour maintenir l'écartement entre deux éléments précontraints, lorsque plusieurs éléments précontraints sont prévus.

Selon un aspect, le au moins un élément précontraint dans un premier état précontraint en expansion est un organe élastique refermé, et l'organe élastique et l'entretoise sont introduits dans le moule à l'aide d'un cône d'expansion sur lequel le dit au moins un élément précontraint et l'entretoise sont montés, le cône d'expansion ayant un diamètre croissant, avec un petit diamètre inférieur ou égal au diamètre intérieur du au moins un élément précontraint dans un état sans contrainte et un grand diamètre correspondant au diamètre intérieur de l'emboiture.

On comprend que le procédé selon la présente invention permet de surmouler directement et dans une même étape le ou les organes élastiques chauffants et la ou les entretoises. De manière avantageuse, on évite l'utilisation de pièces thermoplastique intermédiaires comprenant le ou les éléments précontraints, et les discontinuités résultant de l'utilisation de pièces intermédiaires. De même, la matière thermoplastique du raccord peut remplir directement le ou les éléments précontraints, ce qui permet de limiter des sources de fuite ou de rupture.

L'homme du métier comprend que les entretoises ne participent pas à la rigidité mécanique ni à l'étanchéité.

Par ailleurs, le procédé selon l'invention est utilisable avec la plupart des moules de raccord existants, que les emboitures soient perpendiculaires ou parallèles au plan de joint.

Selon un autre aspect, le au moins un organe élastique chauffant et l'entretoise sont poussés jusqu'à buter au fond du moule à l'aide d'un tubulaire, et le tubulaire et le cône d'expansion sont retirés avant l'étape d'injection. Cette étape peut être réalisée manuellement ou être automatisée.

Le procédé peut comprendre l'étape de placer une première entretoise entre le fond du moule et un premier élément précontraint, et une deuxième entretoise entre le premier élément précontraint et un deuxième élément précontraint. Selon un aspect, le procédé comprend l'étape de placer une pluralité d'entretoises entre une pluralité d'éléments précontraints.

Un nombre limité d'opérations est nécessaire. De plus, le procédé peut utiliser des entretoises standardisées et de géométrie simples, ce qui rend le procédé économique.

La présente invention concerne aussi l'utilisation d'un matériau polymère amorphe ou faiblement cristallin, par exemple PVC, PVC-C ou ABS dans un tel procédé, dans un tel raccord et/ou dans un tel élément de raccord.

D'autres caractéristiques et avantages de la présente invention ressortiront de la description faite ci-après en référence aux dessins annexés qui en illustrent un exemple de réalisation dépourvu de tout caractère limitatif, parmi lesquels :
- La figure 1 illustre un raccord avec un élément de raccord et un tube selon un mode de réalisation de la présente invention ;
- La figure 2 illustre un élément de raccord et un tube avant assemblage selon un mode de réalisation de la présente invention ;
- La figure 3 illustre un élément chauffant selon un mode de réalisation de la présente invention
- Les figures 4a, 4b et 5 illustrent un élément de raccord utilisable avec un raccord des figures 1 et 2, selon un mode de réalisation de la présente invention;
- La figure 6 est un schéma de principe d'un procédé d'assemblage d'un élément de raccord selon un autre mode de réalisation de la présente invention,
- La figure 7 est un schéma de principe d'un procédé de fabrication d'un élément de raccord selon un aspect de la présente invention;
- Les figures 8a à 8c illustrent les étapes du procédé de la figure 7.

Sur les dessins, des éléments identiques ou similaires sont indiqués avec des numéros de référence identiques ou similaires.

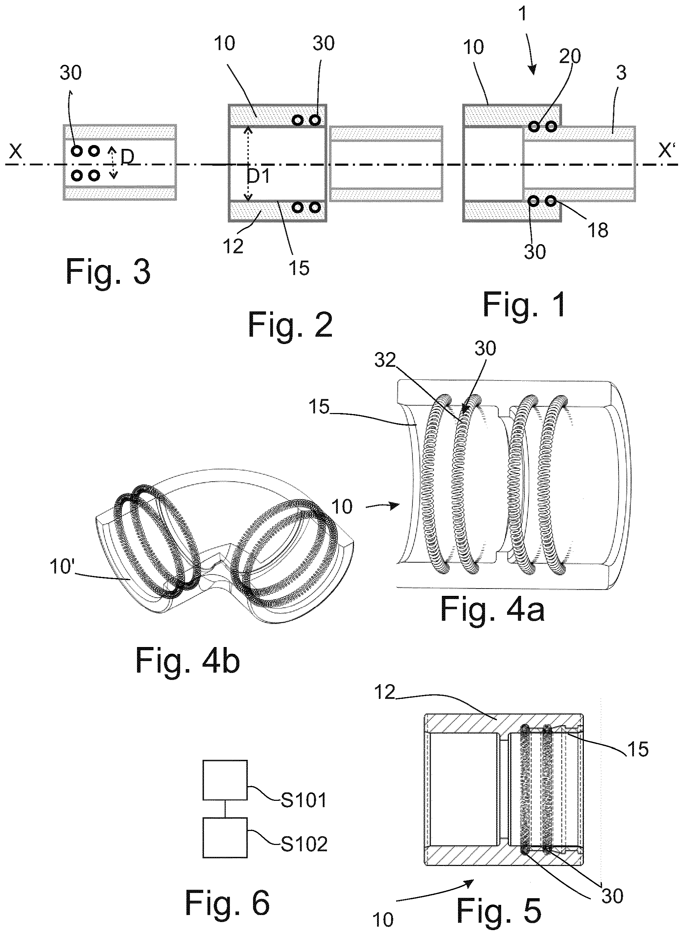

La figure 1 illustre un raccord 1 selon un mode de réalisation de l'invention, pour le raccordement d'élément de tube 3, canalisations ou autre tuyaux, inséré dans un élément de raccord 10. Le raccord du côté droit sur la figure 1 montre le raccord assemblé, et la figure 2 montre le raccord avant assemblage, autour d'un axe longitudinal X-X'.

Le raccord 1 comprend un élément de raccord 10 dans lequel le tube 3 peut être inséré pour former le raccord par assemblage, et plus précisément soudage de l'élément de raccord 10 et du tube 3 selon une zone soudée située le long d'une surface de jonction 20.

L'élément de raccord 10 est bien vu sur les figures 2 et 4a et 5. Dans l'exemple illustré, l'élément de raccord 10 comprend un manchon 12 formant une emboiture 15. L'emboiture 15 a un diamètre interne D1 sensiblement égal au diamètre externe du tube 3. L'exemple représenté est un manchon droit avec deux emboîtures opposées sensiblement de même diamètre, cet exemple n'est pas limitatif et d'autres exemples de raccord entre une emboiture et un tube peuvent être prévus, tels un manchon, un raccord en té, une réduction, un bouchon, un coude 10' comme illustré à la figure 4b (coude à 90°) ou tout autre exemple de raccord utilisé couramment en plomberie.

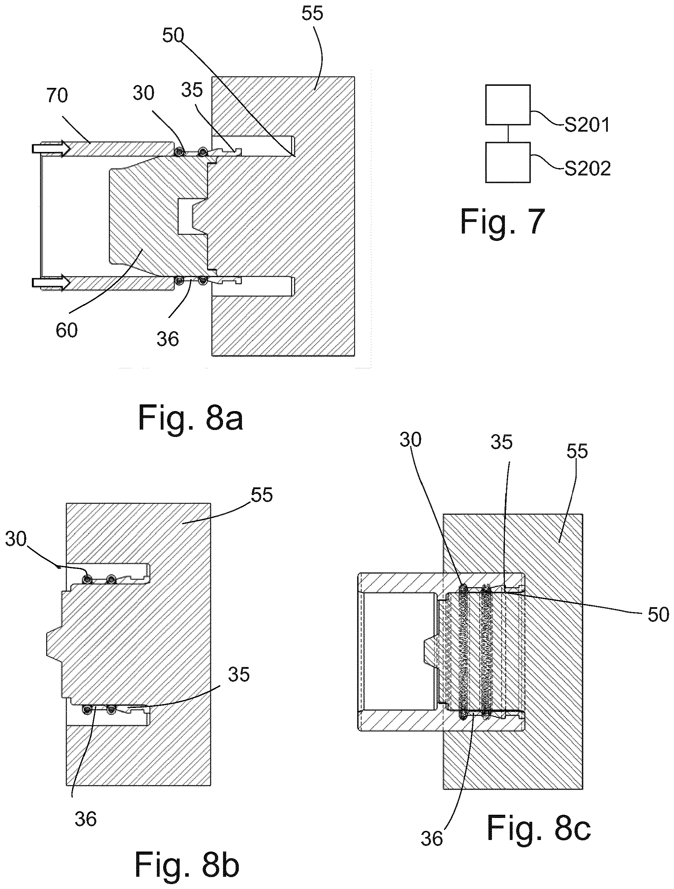

Le manchon 12 forme un bloc dans lequel un ou plusieurs éléments précontraints sont emprisonnés. Dans l'exemple illustré, l'élément précontraint est un organe élastique 30 qui est noyé et figé dans une position initiale dans laquelle l'organe élastique est dans un état précontraint, en expansion radiale. Dans l'exemple des figures 1 à 5, il y a deux éléments précontraints par emboiture. Ceci n'est qu'un exemple non limitatif. Un procédé de fabrication d'un tel élément de raccord sera décrit plus loin en référence à la figure 7.

L'élément précontraint, en particulier l'organe élastique, qui peut être adapté pour le raccord 1 est un ressort hélicoïdal 30 dont les extrémités 32 sont reliées mécaniquement et électriquement, afin d'obtenir une forme torique élastique. Les extrémités 32 peuvent être par exemple soudées entre elles.

Le ressort 30 est dimensionné pour avoir un diamètre externe D inférieur au diamètre interne D1 de l'emboiture 15, lorsque le ressort 30 est dans un état sans contrainte, stable, comme vu sur la figure 3.

Le ressort peut être un ressort en acier inoxydable, par exemple en acier inox par exemple AISI 301 ou 302.

Comme cela sera expliqué plus en détails en référence à la figure 7, l'élément précontraint peut être chauffé, par exemple par induction. Ainsi chauffé, l'élément précontraint peut ramollir la matière dans laquelle il est piégé, lorsque sa température dépasse localement le point de ramollissement du matériau thermoplastique, suffisamment pour que l'élément précontraint puisse se déplacer localement afin de diminuer ses contraintes mécaniques et à prendre un état de contrainte mécanique inférieur contraint. Un tel élément de raccord permet un assemblage par combinaison d'interpénétration locale, rendue possible par le mouvement de rétractation du ressort qui entraine la matière de l'élément de raccord dans la matière du tube créant ainsi des interpénétrations de matières.

Sur les figures 2, 4a et 5, c'est-à-dire avant assemblage avec le tube 3, l'élément précontraint 30 - dans le mode de réalisation le ressort - est noyé dans le manchon 12, dans un premier état précontraint en expansion dans une position initiale à proximité de la surface de jonction 20 et sur le pourtour de la surface de jonction.

Apres assemblage, l'organe élastique 30 est immobilisé dans une position à cheval entre le tube 3 et l'élément de raccord 10, dans un état dans lequel l'organe élastique 30 est encore précontraint en expansion radiale (figure 1).

La surface de jonction 20 comprend alors une ligne de soudure 18, le long de la surface de jonction 20, obtenue par interpénétration locale des matières du tube et de l'élément de raccord. La ligne de soudure 18 peut être circonférentielle. L'homme du métier comprend que la zone soudée est concentrée autour du ou des éléments précontraints chauffants, là où la matière est ramollie au contact direct avec l'organe élastique 30.

Un procédé d'assemblage ou de raccordement est illustré à la figure 6, en référence avec l'élément de raccord 10 et le tube 3.

Dans une première étape S101, l'élément précontraint 30 est chauffé pour atteindre à une température supérieure au point de ramollissement du matériau dans lequel l'élément précontraint 30 est noyé. Pendant cette phase, l'élément précontraint ne bouge pas. L'élément précontraint est ensuite maintenu à une température supérieure à la température de ramollissement, permettant de ramollir localement le matériau, ce qui permet de faire passer l'élément précontraint 30 d'une position initiale dans laquelle l'élément précontraint 30 est noyé dans un premier état précontraint en expansion dans l'emboiture 15, à une position intermédiaire, sous l'effet de l'énergie élastique de l'élément précontraint qui tend à reprendre une position sans contrainte mécanique.

A cette étape, une première phase de chauffage est programmée avec injection de puissance par induction. Cette puissance peut être modulée dans le temps, en particulier elle peut être graduellement réduite afin de ne pas excéder des températures susceptibles de créer des dégradations de la matière. L'élément précontraint 30 passe alors de la position initiale en expansion à une position intermédiaire dans un état précontraint intermédiaire. Dans le mode de réalisation illustré, l'élément précontraint 30 est un élément ou organe élastique, par exemple un ressort refermé sur lui-même.

Dans une deuxième étape S102, on coupe l'injection de puissance par induction. Le ressort 30 voit sa température baisser et la chaleur emmagasinée continue de chauffer localement la matière thermoplastique pendant un court instant puis cesse de chauffer.

Cette étape S102 se traduit par le déplacement du ressort 30 de la position intermédiaire dans un état précontraint intermédiaire à la position finale de raccord illustrée à la figure 1. Dans cette position finale, le ressort est à cheval entre l'emboiture et le tube et est dans un deuxième état précontraint en expansion, différent d'un état stable sans contrainte. Il s'agit en fait d'une phase de relaxation, dans laquelle le ressort se déplace de la position intermédiaire à sa position finale, sous l'effet de l'énergie élastique résiduelle du ressort entre l'état précontraint intermédiaire et le deuxième état précontraint, et de la viscosité et de la résistance à la friction du matériau thermoplastique amorphe ou faiblement cristallin.

L'élément de raccord 10 et le tube 3 sont en matériau thermoplastique amorphe ou faiblement cristallin.

L'injection de puissance est contrôlée afin que l'organe élastique s'immobilise dans une position à cheval entre le tube 3 et l'élément de raccord 10, dans un état dans lequel l'organe élastique est précontraint en expansion radiale. L'arrêt programmé ou contrôlé de l'injection de puissance par induction peut être effectué à un moment donné ou une position donnée de l'organe élastique, en tenant compte de l'énergie élastique résiduelle de l'organe élastique chauffant lorsque l'injection de puissance est stoppée d'un part, et des caractéristiques du matériau thermoplastique d'autre part, en particulier la viscosité du thermoplastique et la friction avec le thermoplastique.

Ces caractéristiques permettent d'obtenir à la fois un temps de chauffe rapide, une force de rappel du ressort suffisante pour aboutir à un temps de montée en température du ressort suffisamment court. En effet, l'homme du métier comprend que pour chauffer le ressort avec une puissance donnée et pour atteindre la température de ramollissement, il faut un certain temps. Pendant cette phase de montée en température, il n'y a pas de mouvement.

Par ailleurs, ces caractéristiques favorisent l'obtention d'une température suffisamment homogène dans la zone de ramollissement du thermoplastique. La plage de stabilité thermique des matériaux amorphes ou faiblement cristallins mais non semi cristallins considérés est étroite. Si la température est trop basse, le matériau ne se ramollit pas suffisamment; si elle est trop haute, il peut se dégrader.

Ainsi, l'homme du métier comprend que la viscosité élevée des polymères thermoplastiques amorphes ou faiblement cristallin et non semi cristallin dans leur état fondu (en relation avec la température) constitue un effet naturellement stabilisant du procédé d'assemblage, contrairement aux polymères cristallins dont la viscosité est beaucoup plus faible. En effet lors de la fusion ces matériaux polymères cristallins passent quasiment instantanément d'un état dur à un état liquide de viscosité minime. Dans un procédé d'assemblage avec des polymères cristallins, l'organe élastique reprend une position non contrainte élastiquement, dans laquelle le ressort est sensiblement au repos.

La variation de la force de rappel du ressort au fur et à mesure qu'il se détend de sa position initiale stressée à sa position finale encore stressée est un facteur stabilisant permettant de mieux contrôler la position finale du ressort.

Par ailleurs, il faut également prendre en compte la perte de rendement du phénomène d'induction lorsque le ressort s'éloigne de l'élément inducteur. A partir d'une certaine valeur de pénétration du ressort dans le tube, le transfert d'énergie devient moins efficace. Ceci constitue également un effet naturellement stabilisant du procédé.

L'élément précontraint, en particulier le ressort, est également dimensionné pour obtenir une force de rappel du ressort suffisante, un temps d'activation thermique du ressort suffisamment court, et une température suffisamment homogène dans la zone de fonte du thermoplastique.

La Figure 7 illustre un procédé de fabrication d'un élément de raccord 10 selon la présente invention et les figures 8a à 8c illustrent les différentes étapes du procédé de la figure 7.

Dans une première étape S201, on place au moins un élément précontraint, par exemple organe élastique chauffant 30, dans un premier état précontraint en expansion et au moins une entretoise 35 sur un noyau de moule 50 d'un moule 55.

Comme illustré sur la figure 8a l'organe élastique chauffant 30 et l'entretoise 35 sont introduits dans le moule 55 à l'aide d'un cône d'expansion 60 sur lequel le au moins un organe élastique 30 et la au moins une entretoise 35 sont montés.

Le cône d'expansion 60 a un diamètre croissant, avec un petit diamètre inférieur ou égal au diamètre intérieur du tore au repos de l'organe élastique chauffant 30 et un grand diamètre au moins égal au diamètre intérieur D1 de l'emboiture de l'élément de raccord 10 à fabriquer, par exemple tel que représenté à la figure 5.

Le cône d'expansion 60 permet ainsi l'expansion radiale du ou des organes élastiques chauffants 30 jusqu'à leur diamètre dans l'élément de raccord 10, dans le premier état précontraint en expansion radiale.

Le au moins un organe élastique chauffant 30 et la au moins une entretoise 35 peuvent être poussés jusqu'à buter au fond du moule 55 à l'aide d'un élément tubulaire 70. Autrement, le au moins un organe élastique chauffant 30 et la au moins une entretoise 35 peuvent être poussés manuellement.

Une fois le au moins un organe élastique chauffant 30 dans un premier état précontraint en expansion et la au moins une entretoise 35 en place sur le noyau de moule 50 d'un moule 55, le cône d'expansion 60 et l'élément tubulaire 70 (si présent) sont retirés du moule 55 (fig. 8b).

Le au moins un organe élastique chauffant 30 est dans le premier état précontraint en position expansée. Ainsi, l'organe élastique chauffant 30 exerce une force radiale qui le plaque contre le noyau du moule 50. Ceci génère une friction qui empêche tout mouvement axial de la au moins une entretoise 35 après sa mise en place dans le moule 55.

Dans le mode de réalisation illustré, les éléments précontraints sont prévus comme étant deux organes élastiques chauffants 30, séparés par une entretoise additionnelle 36. Cet exemple n'est pas limitatif et le type et le nombre d'élément précontraints et d'entretoises additionnelles peut varier selon la conception de l'élément de raccord 10 à fabriquer par le procédé décrit.

Dans une deuxième étape S202, le thermoplastique est injecté afin de surmouler le au moins un élément précontraint, ici l'organe élastique chauffant 30, et l'entretoise 35.

Lors de l'injection, le thermoplastique remplit la cavité du moule 55, y compris le ou les organes chauffants élastiques 30 (Fig. 8c).

Après les phases de maintien et de refroidissement, le moule peut s'ouvrir automatiquement ou être ouvert manuellement, afin de permettre l'éjection ou la récupération de l'élément de raccord 10 ainsi obtenu.

L'entretoise 35 est de préférence cylindrique sur sa face interne. Elle peut être en thermoplastique, identique ou non au thermoplastique constituant l'élément de raccord 10.

Le procédé permet ainsi la fabrication d'un élément de raccord en thermoplastique, dans le lequel au moins un organe élastique est noyé, dans une position maitrisée et dans un état de précontrainte en expansion radiale figé par le thermoplastique. Le procédé de fabrication d'un élément de raccord en thermoplastique comprend un nombre limité d'étapes.

L'homme du métier comprend que la ou les entretoises 35, 36 surmoulées ne participent pas et ne nuisent pas à la rigidité mécanique et l'étanchéité de l'élément de raccord 10 ainsi obtenu. Ainsi, avantageusement, les formes et matériaux de la ou des entretoises peuvent varier pour leur donner d'autres fonctions.

Par exemple, l'entretoise 35 peut être utilisée comme témoin de bon raccordement. Pour ce faire, elle peut par exemple utiliser indépendamment ou combiner les éléments suivants : (1) Etre constituée d'un thermoplastique dont le coefficient de dilatation thermique est supérieur à celui du matériau thermoplastique principal du raccord. Ainsi, lors du raccordement, l'entretoise va, en se dilatant, sortir du raccord de façon visible. (2) Autrement l'entretoise peut avoir une forme conique, de façon à accentuer son déplacement hors du raccord lors du raccordement. (3) Une forme fendue peut permettre à l'entretoise de se détacher du raccord lors du raccordement. (4) Un thermoplastique ayant des propriétés thermochromiques irréversibles peut assurer que l'entretoise change de couleur de manière irréversible lorsqu'elle atteint une température donnée, lors du raccordement.

Alternativement au procédé de fabrication décrit en référence à la figure 7 utilisant une ou plusieurs entretoise(s), un tel élément de raccord peut être fabriqué en utilisant un positionneur. Le positionneur est de forme cylindrique creuse, de sorte que son diamètre intérieur est égal au diamètre de l'emboiture de l'élément de raccord. Le positionneur comporte une ou plusieurs gorges circonférentielles sur sa face extérieure, qui permettent de positionner et maintenir le ou les éléments élastiques chauffants. Le positionneur peut être constitué d'un thermoplastique, identique ou non au thermoplastique constituant l'élément de raccord.

La fabrication se fait selon les étapes suivantes :
Dans une première étape, le ou les éléments élastiques sont expansés, par exemple au moyen d'un cône, puis positionnés dans les gorges du positionneur.

Le ou les éléments élastiques peuvent éventuellement être chauffés pour pénétrer dans le positionneur, de sorte d'affleurer à sa surface intérieure, qui est au diamètre de l'emboiture. Cette étape de chauffage est optionnelle.

Le positionneur et le ou les éléments élastiques étant désormais solidaires, l'ensemble est introduit sur le noyau du moule et poussé qu'à buter au fond du moule. Le thermoplastique est ensuite injecté afin de surmouler le ou les éléments élastiques chauffants comme exemple d'élément précontraint, et le positionneur. Lors de l'injection, le thermoplastique remplit la cavité du moule, y compris le ou les éléments chauffants élastiques.

Après les phases de maintien et de refroidissement, le moule peut s'ouvrir automatiquement ou être ouvert manuellement, afin de permettre l'éjection ou la récupération de l'élément de raccord ainsi obtenu.

Le procédé permet ainsi la fabrication d'un élément de raccord en thermoplastique, dans le lequel au moins un organe élastique est noyé, dans une position maitrisée et dans un état de précontrainte en expansion radiale figé par le thermoplastique. Le procédé de fabrication d'un élément de raccord en thermoplastique comprend un nombre limité d'étapes.

Cette invention n'est pas limitée à l'exemple de réalisation décrit ci-dessus mais elle en englobe toutes les variantes, dans la portée des revendications.

## Revendications

1. Elément de raccord (10) comprenant
- une emboiture (15) en matériau thermoplastique pour insérer un élément de tube (3), l'emboiture pouvant être soudée à l'élément de tube selon une surface de jonction (20), l'emboiture (15) ayant un diamètre interne (D1) d'emboiture,
- au moins un élément précontraint (30) chauffant noyé dans l'emboiture (15), dans un premier état précontraint en expansion dans une position initiale dans laquelle un diamètre interne du au moins un élément précontraint est égal ou supérieur au diamètre interne d'emboiture et sur le pourtour de la surface de jonction, dans lequel le au moins un élément précontraint est apte à prendre un deuxième état précontraint lorsque sa température dépasse une température de ramollissement local du matériau thermoplastique,
- **caractérisé en ce que** le au moins un élément précontraint, dans un état stable non contraint, a un diamètre extérieur (D) inférieur au diamètre interne de l'emboiture.

2. Elément de raccord selon la revendication 1, dans lequel le matériau thermoplastique est un polymère amorphe ou faiblement cristallin c'est-à-dire avec un taux de cristallinité inférieur à 20%, par exemple PVC, PVC-C ou ABS.

3. Elément selon la revendication 2, dans lequel le au moins un élément précontraint est apte à être chauffé par induction.

4. Elément selon la revendication 3, dans lequel le au moins un élément précontraint (30) est un organe élastique, de préférence un ressort hélicoïdal refermé sur lui-même, dimensionné de sorte de stocker une énergie élastique permettant à l'organe élastique de se déplacer en position finale de raccord à cheval entre l'emboiture et le tube, sous les effets combinés de l'énergie élastique, de la viscosité et de la résistance à la friction du matériau thermoplastique amorphe ou faiblement cristallin, et de la puissance de chauffe transmise à chaque instant par induction à l'élément élastique.

5. Raccord (1) comprenant un élément de raccord (10) selon l'une des revendications précédentes et un élément de tube (3) inséré dans l'élément de raccord, dans lequel l'élément de tube (3) et l'élément de raccord (10) sont soudés, et dans lequel le au moins un élément précontraint (30) est à cheval entre l'emboiture (15) et l'élément de tube (3), dans un état final précontraint en expansion, différent de l'état stable non contraint.

6. Raccord selon la revendication 5, dans lequel la surface de jonction entre l'élément de raccord et le tube comprend une ligne de soudures, sur le pourtour de la surface de jonction (20).

7. Raccord selon la revendication 5 ou 6, dans lequel l'élément de tube (3) et l'élément de raccord (10) sont dans un matériau thermoplastique qui est un polymère faiblement cristallin ou amorphe, par exemple PVC, PVC -C ou ABS.

8. Procédé de fabrication d'un élément de raccord selon l'une des revendications 1 à 4, comprenant les étapes :
- Placer au moins un élément précontraint (30), en particulier un organe élastique chauffant, dans un premier état précontraint en expansion, ainsi qu'au moins une entretoise (35) sur un noyau de moule (50),
- Injecter un matériau thermoplastique afin de surmouler le au moins un élément précontraint (30) et la au moins une entretoise (35).

9. Procédé selon la revendication précédente, dans lequel le au moins un élément précontraint (30) dans un premier état précontraint en expansion est un organe élastique refermé, et l'organe élastique (30) et la au moins une entretoise (35) sont introduits dans le moule à l'aide d'un cône d'expansion (60) sur lequel le dit au moins un élément précontraint et la au moins une entretoise sont montés, le cône d'expansion (60) ayant un diamètre croissant, avec un petit diamètre inférieur ou égal au diamètre intérieur du au moins un élément précontraint (30) dans un état sans contrainte et un grand diamètre correspondant au diamètre intérieur de l'emboiture (15).

10. Procédé selon la revendication précédente, dans lequel le au moins un organe élastique chauffant (30) et la au moins une entretoise (35) sont poussés jusqu'à buter au fond du moule à l'aide d'un tubulaire (70), et le tubulaire (70) et le cône d'expansion (60) sont retirés avant l'étape d'injection.

11. Procédé selon l'une des revendications 8 à 10, comprenant l'étape de placer une première entretoise (35) entre le fond du moule et un premier élément précontraint (30), et une deuxième entretoise (36) entre le premier élément précontraint et un deuxième élément précontraint.

12. Procédé selon l'une des revendications 8 à 11, comprenant l'étape de placer une pluralité d'entretoises (35, 36) entre une pluralité d'élément précontraints.

13. Utilisation d'un matériau polymère amorphe ou faiblement cristallin c'est-à-dire avec un taux de cristallinité inférieur à 20%, et non semi cristallin, par exemple PVC, PVC-C ou ABS dans un procédé selon l'une des revendications 8 à 12, dans un raccord selon l'une des revendications 5 à 7 et/ou dans un élément de raccord selon l'une des revendications 1 à 4.

## Patentansprüche

1. Fittingelement (10) umfassend
- eine Aufnahme (15) aus thermoplastischem Kunststoff zum Einsetzen eines Rohrelements (3), wobei die Aufnahme entlang einer Verbindungsfläche (20) mit dem Rohrelement verschweißbar ist, wobei die Aufnahme (15) einen Aufnahme -Innendurchmesser (D1) aufweist
- mindestens ein vorgespanntes Heiz-Element (30), das in die Aufnahme (15) eingebettet ist, in einem ersten vorgespannten gedehnten Zustand, in dem ein Innendurchmesser des mindestens einen vorgespannten Elements gleich oder größer als der Innendurchmesser der Aufnahme und um die Verbindungsfläche herum angeordnet ist, wobei das mindestens eine vorgespannte Element in der Lage ist, einen zweiten vorgespannten Zustand anzunehmen, wenn seine Temperatur eine lokale Erweichungstemperatur des thermoplastischen Materials überschreitet,
**dadurch gekennzeichnet, dass** das mindestens eine vorgespannte Element in einem stabilen entspannten Zustand einen Außendurchmesser (D) aufweist, der kleiner ist als der Innendurchmesser der Aufnahme.

2. Fittingelement nach Anspruch 1, bei welchem das thermoplastische Material ein amorphes oder niedrig kristallines Polymer ist, d. h. mit einer Kristallinität von weniger als 20 %, z. B. PVC, PVC-C oder ABS.

3. Element nach Anspruch 2, bei welchem das mindestens eine vorgespannte Element zur Erwärmung durch Induktion geeignet ist.

4. Element nach Anspruch 3, wobei das mindestens eine vorgespannte Element (30) ein elastisches Glied ist, vorzugsweise eine in sich geschlossene Schraubenfeder, dimensioniert, um elastische Energie zu speichern, damit sich das elastische Glied in die endgültige Verbindungsposition bewegen kann, in der es die Aufnahme und das Rohr überspannt, unter der kombinierten Wirkung der elastischen Energie, der Viskosität und des Reibungswiderstands des amorphen oder niedrigkristallinen thermoplastischen Materials und der zu jedem Zeitpunkt induktiv auf das elastische Glied übertragenen Heizleistung.

5. Fitting (1) mit einem Fittingelement (10) nach einem der vorhergehenden Ansprüche und einem in das Fittingelement eingesetztem Rohrelement (3), wobei das Rohrelement (3) und das Fittingelement (10) verschweißt sind/werden, und wobei das mindestens eine vorgespannte Element (30) die Aufnahme (15) und das Rohrelement (3) in einem gedehnten vorgespannten Endzustand, der sich vom entspannten stabilen Zustand unterscheide,t überspannt.

6. Fitting nach Anspruch 5, bei welchem die Verbindungsfläche zwischen dem Fittingelement und dem Rohr eine Schweißnahtlinie, umfänglich der Verbindungsfläche (20) umfasst.

7. Fitting nach Anspruch 5 oder 6, bei welchem das Rohrelement (3) und das Fittingelement (10) aus einem thermoplastischen Material bestehen, das ein niedrigkristallines oder amorphes Polymer ist, beispielsweise PVC, PVC-C oder ABS.

8. Verfahren zur Herstellung eines Fittingelementes nach einem der Ansprüche 1 bis 4,
mit den Schritten:
- Anordnen mindestens eines vorgespannten Elements (30), insbesondere eines elastischen Heizgliedes, in einem ersten vorgespannten gedehnten Zustand, zusammen mit mindestens einem Abstandshalter (35) auf einen Formkern (50),
- Einspritzen eines thermoplastischen Materials, um das mindestens eine vorgespannte Element (30) und den mindestens einen Abstandshalter (35) zu umformen.

9. Verfahren nach dem vorhergehenden Anspruch, bei welchem das mindestens eine vorgespannte Element (30) in einem ersten vorgespannten gedehnten Zustand ein in sich geschlossenes elastisches Glied ist und das elastische Element (30) und der mindestens eine Abstandshalter (35) mit Hilfe eines Expansionskegels (60), auf dem das mindestens eine vorgespannte Element und der mindestens eine Abstandshalter angeordnet sind, in die Form eingeführt werden, wobei der Expansionskegel (60) einen zunehmenden Durchmesser aufweist, mit einem kleinen Durchmesser, der kleiner oder gleich dem Innendurchmesser des mindestens einen vorgespannten Elements (30) in einem entspannten Zustand ist, und einem großen Durchmesser, der dem Innendurchmesser des Fittingelementes (15) entspricht.

10. Verfahren nach dem vorhergehenden Anspruch, bei welchem das mindestens ein elastisches Heiz-Glied (30) und der mindestens eine Abstandshalter (35) mittels eines Rohres (70) in Anlage an den Boden der Form gedrückt werden und das Rohr (70) und der Expansionskegel (60) vor dem Einspritzschritt entfernt werden.

11. Verfahren nach einem der Ansprüche 8 bis 10, umfassend den Schritt des Anordnens eines ersten Abstandshalters (35) zwischen dem Boden der Form und einem ersten vorgespannten Element (30) und eines zweiten Abstandshalters (36) zwischen dem ersten vorgespannten Element und einem zweiten vorgespannten Element.

12. Verfahren nach einem der Ansprüche 8 bis 11, umfassend den Schritt des Anordnens einer Vielzahl von Abstandshaltern (35, 36) zwischen einer Vielzahl von vorgespannten Elementen.

13. Verwendung eines amorphen oder niedrig kristallinen Polymermaterials, d.h. mit einer Kristallinität von weniger als 20 % und nicht teilkristallin, z.B. PVC, PVC-C oder ABS, in einem Verfahren nach einem der Ansprüche 8 bis 12, in einem Fitting nach einem der Ansprüche 5 bis 7 und/oder in einem Fittingelement nach einem der Ansprüche 1 bis 4.

## Claims

1. A fitting element (10) comprising
- a socket (15) made of a thermoplastic material for inserting a pipe element (3), the socket being weldable to the pipe element along a joining surface (20), the socket (15) having a socket inner diameter (D1),
- at least one heating prestressed element (30) embedded in the socket (15), in a first expanded prestressed state to an initial position in which an inner diameter of the at least one prestressed element is equal to or greater than the socket inner diameter and on the circumference of the joining surface, wherein the at least one prestressed element is adapted to assume a second prestressed state when its temperature exceeds a local softening temperature of the thermoplastic material,
- **characterised in that** the at least one prestressed element, in a stable unstressed state, has an external diameter (D) smaller than the inner diameter of the socket.

2. The fitting element according to claim 1, wherein the thermoplastic material is an amorphous or low crystalline polymer, i.e. with a crystallinity of less than 20%, for example PVC, PVC-C or ABS.

3. The element according to claim 2, wherein the at least one prestressed element is adapted to be heated by induction.

4. The element according to claim 3, wherein the at least one prestressed element (30) is an elastic member, preferably a self-closed coil spring, dimensioned so as to store elastic energy to enable the elastic member to move into a final fitting position straddling the socket and the pipe, under the combined effects of the elastic energy, the viscosity and frictional resistance of the amorphous or low crystalline thermoplastic material, and of the heating power inductively transmitted to the elastic member at each instant.

5. A fitting (1) comprising a fitting element (10) according to any of the preceding claims and a pipe element (3) inserted into the fitting element, wherein the pipe element (3) and the fitting element (10) are welded, and wherein the at least one prestressed element (30) straddles the socket (15) and the pipe element (3) in a prestressed expanded final state different from the unstressed stable state.

6. The fitting according to claim 5, wherein the joining surface between the fitting element and the tube comprises a welding line on the circumference of the joining surface (20).

7. The fitting according to claim 5 or 6, wherein the pipe element (3) and the fitting element (10) are made of a thermoplastic material which is a low crystalline or amorphous polymer, for example PVC, PVC-C or ABS.

8. A method of manufacturing a connecting element according to any of claims 1 to 4, comprising the steps:
- Placing at least one prestressed element (30), in particular a heating elastic member, in a first prestressed expanded state, together with at least one spacer (35) on a mould core (50),
- Injecting a thermoplastic material in order to overmould the at least one prestressed element (30) and the at least one spacer (35).

9. The method according to the preceding claim, wherein the at least one prestressed element (30) in a first expanded prestressed state is a closed elastic member, and the elastic member (30) and the at least one spacer (35) are introduced into the mould with the aid of an expansion cone (60) on which said at least one prestressed element and the at least one spacer are mounted, the expansion cone (60) having an increasing diameter, with a small diameter less than or equal to the inner diameter of the at least one prestressed element (30) in an unstressed state and a large diameter corresponding to the inner diameter of the socket (15).

10. The method according to the preceding claim, wherein the at least one heating elastic member (30) and the at least one spacer (35) are pushed to abut the bottom of the mould with a tubular (70), and the tubular (70) and the expansion cone (60) are removed prior to the injection step.

11. The method according to any of claims 8 to 10, comprising the step of placing a first spacer (35) between the bottom of the mould and a first prestressed element (30), and a second spacer (36) between the first prestressed element and a second prestressed member.

12. The method according to any of claims 8 to 11, comprising the step of placing a plurality of spacers (35, 36) between a plurality of prestressed members.

13. Use of an amorphous or low crystalline polymeric material, i.e. with a crystallinity of less than 20%, and not semi-crystalline, e.g. PVC, PVC-C or ABS in a method according to any of claims 8 to 12, in a fitting according to any of claims 5 to 7, and/or in a fitting element according to any of claims 1 to 4.
